# EUROPEAN PATENT APPLICATION

(11) **EP 2 067 586 A2**
(43) Date of publication of application: **10.06.2009**
(21) Application number: 08019069.7
(22) Date of filing: 31.10.2008
(51) Int. Cl.: B27M 1/08, B23Q 11/00, B23Q 7/04

(54) **Woodworking machine**

(30) Priority: 04.12.2007 IT PC20070048
(71) Applicant: Industrial System Automation I.S.A. S.r.l., 29100 Piacenza (IT)
(72) Inventor: Tagliaferri, Renzo, 29100 Piacenza (IT); Tagliaferri, Luciano, 29100 Piacenza (IT)
(74) Representative: Minoja, Fabrizio

(57) **Abstract**

This invention relates to a woodworking machine, designed in particular for machining bars of wood such as the type used in the manufacture of door and window frames, which presents characteristics that accelerate the machining of said bars, and in particular characteristics that allow constant control to be maintained over the absolute position of the workpiece so that it can be machined on all sides using the initial position reference.

Specifically, said machine comprises a system that traverses the semi-manufactured product in a direction orthogonal to the direction of advance, in order to move said semi-manufactured product from a first mobile carriage to a second mobile carriage, allowing profiling to be performed on both sides of the workpiece with no need to repeat the "workpiece zero" operations, thus saving a great deal of time and considerably increasing the productivity rate.

Said mobile carriages are **characterised in that** they are fitted with a lateral workpiece clamping device, positioned at one end of said carriages; said device collaborates with the traditional workpiece clamping devices during end-trimming operations which, as they are performed on a projecting part, cause bending moments that tend to move the workpiece, thus prejudicing the precision of all the other machining operations.

## Description

This invention relates to a woodworking machine, designed in particular for machining bars of wood such as the type used in the manufacture of door and window frames, which presents characteristics that accelerate the machining of said bars, and in particular characteristics that allow constant control to be maintained over the absolute position of the workpiece so that it can be machined on all sides using the initial position reference.

Specifically, said machine comprises a system that traverses the semi-manufactured product in a direction orthogonal to the direction of advance, in order to move said semi-manufactured product from a first mobile carriage to a second mobile carriage, allowing profiling to be performed on both sides of the workpiece with no need to repeat the "workpiece zero" operations, thus saving a great deal of time and considerably increasing the productivity rate.

Said mobile carriages are characterised in that they are fitted with a lateral workpiece clamping device, positioned at one end of said carriages; said device collaborates with the traditional workpiece clamping devices during end-trimming operations which, as they are performed on a projecting part, cause bending moments that tend to move the workpiece, thus prejudicing the precision of all the other machining operations.

Another innovative characteristic of the woodworking machine according to the invention is that it includes a chip suction system comprising a series of mobile hoods which can move to the operating area near the chuck heads in order to extract as many chips as possible.

The machines designed for this type of work can be divided into two types: (i) machines in which the workpiece remains stationary, clamped against suitable abutments, and the tool moves to perform the various operations, and (ii) machines in which the tool remains stationary and the workpiece is moved as required.

For example, machines are known of the type comprising a base to which are fitted guides on which one or more complexes move along a main axis of the machine, which said complexes comprise grippers for handling the workpiece so as to move it to one or more operating zones, where the tools required for different operations are located.

However, said machines, and other similar ones, made according to the prior art, present various drawbacks.

On said machines the workpiece is usually machined in stages, because the clamping devices interfere with the tools and do not allow simultaneous work to be performed on both sides of the bar, along its whole length, as required by profiling operations, for example.

Consequently, the problem that arises is that the workpiece position has to be reset whenever it is moved to change its position in the clamping devices, which leads to lower final precision of the end product and a considerable increase in the length of the manufacturing cycle.

To eliminate said problems affecting the devices made according to the prior art, this invention offers a woodworking machine, designed in particular for machining wooden bars, such as the type used in the manufacture of door and window frames, characterised in that it includes a CNC device that traverses the semi-manufactured product in a direction orthogonal to the direction of advance, to transfer said semi-manufactured product from a first mobile carriage to a second mobile carriage where it presents to the tools the opposite side to the one just machined, thus allowing profiling work to be performed on two sides of the workpiece, and all the other drilling and milling operations to be performed with no need to repeat the "workpiece zero" operations.

Moreover, as said machine is equipped with two mobile carriages, each dedicated to different operations, it can machine two workpieces simultaneously, leading to a considerable increase in productivity, which has not been achievable to date with the machines on the market.

This invention will now be described in detail, by way of example but not of limitation, by reference to the annexed figures wherein:
- Figure 1 is a perspective view of the woodworking machine according to the invention.
- Figure 2 is a plan view of said woodworking machine.
- Figure 3 is a perspective view of the loading zone.
- Figure 4 is a perspective view of carriage X1.
- Figure 5 is a perspective view of the lateral head clamping device in the rest position.
- Figure 6 is a perspective view of the lateral head clamping device in the operational position.
- Figures 7 and 8 are two perspective views of the machining zone.
- Figures 9a and 9b are two perspective views of the motorised chucks and the suction hoods.
- Figure 10a is a perspective view of the chip suction device, with both hoods in the non-operational position.
- Figure 10b is a perspective view of the chip suction device, with one hood in the operational position.
- Figure 11 is a perspective view of carriage X2 in the working position.
- Figure 12 is a perspective view of carriage X2 in the workpiece traverse position.
- Figure 13 is a perspective view of the unloading zone;
- Figure 14 is a schematic view of the devices that transfer the workpiece from the first to the second carriage.

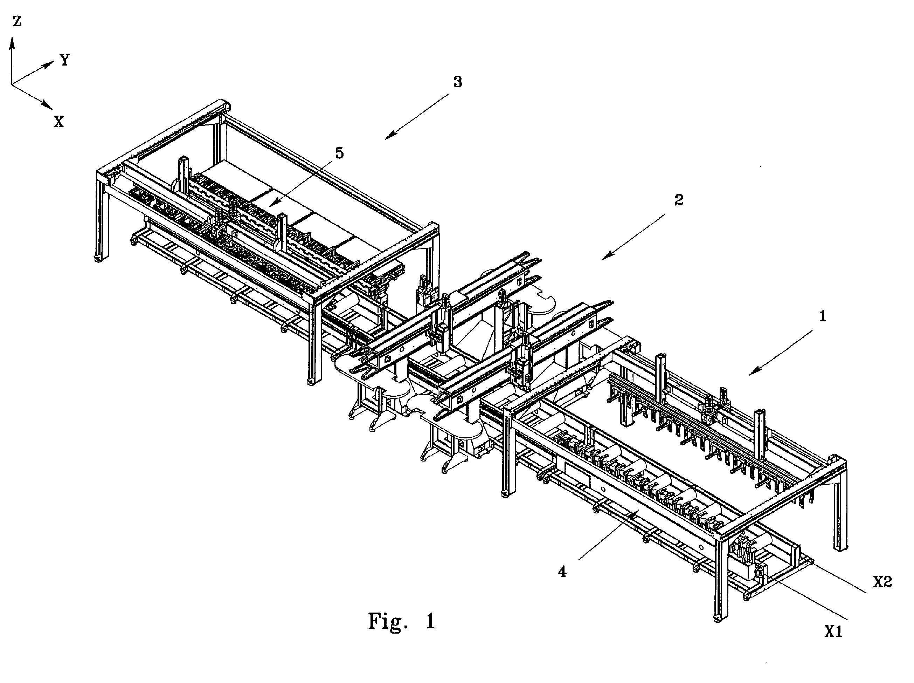

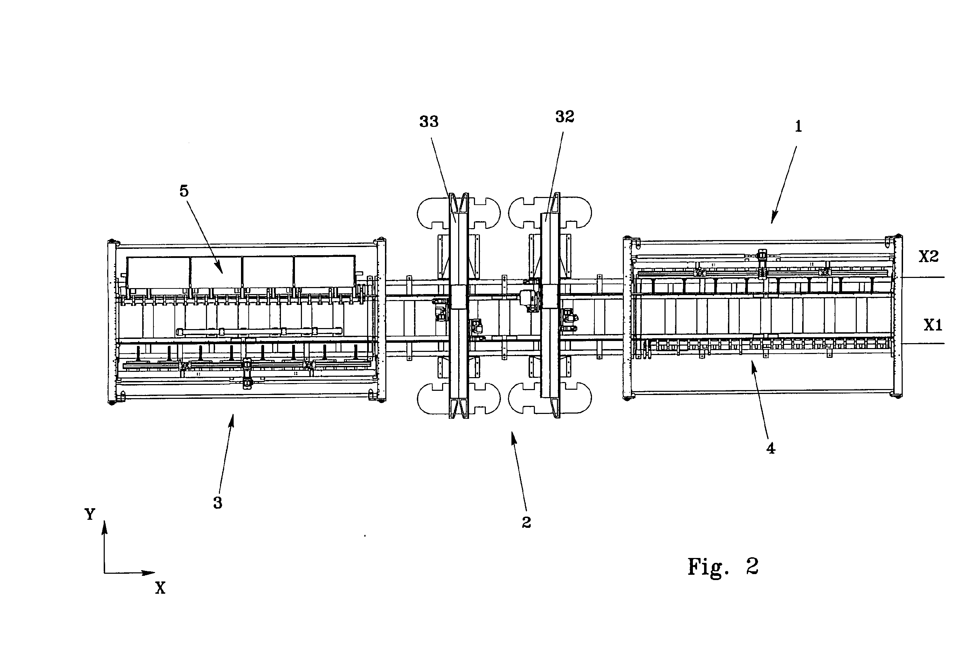

As shown in figures 1 and 2, the woodworking machine comprises a loading zone 1, an operational zone 2, and a workpiece traverse and unloading zone 3; the machined workpieces are moved by two carriages 4 and 5 which slide longitudinally along two axes X1 and X2 respectively.

Carriages 4 and 5 run on guides 16 and 34 positioned on opposite sides of the machine in relation to the direction of advance of the carriages.

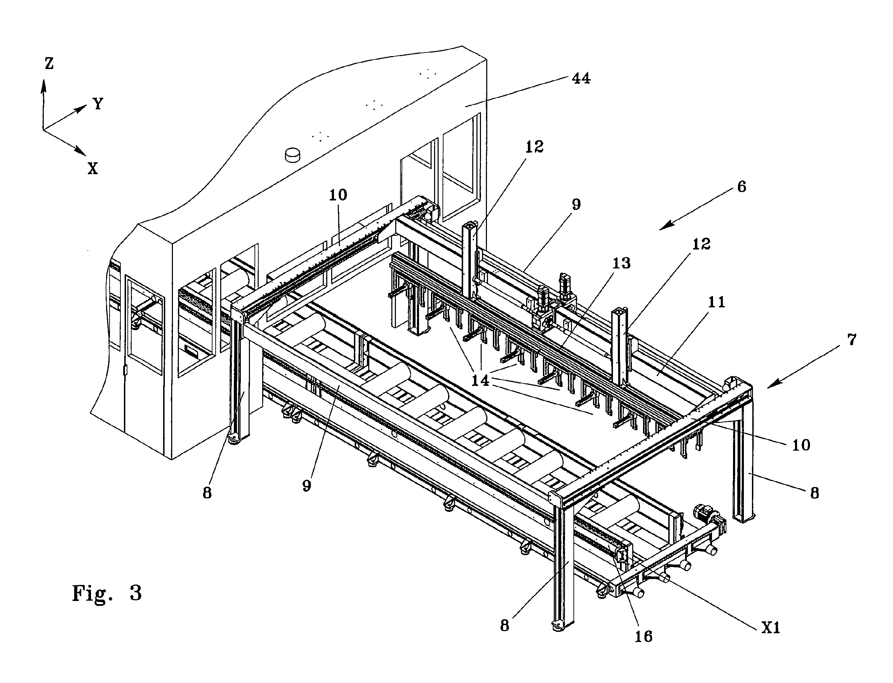

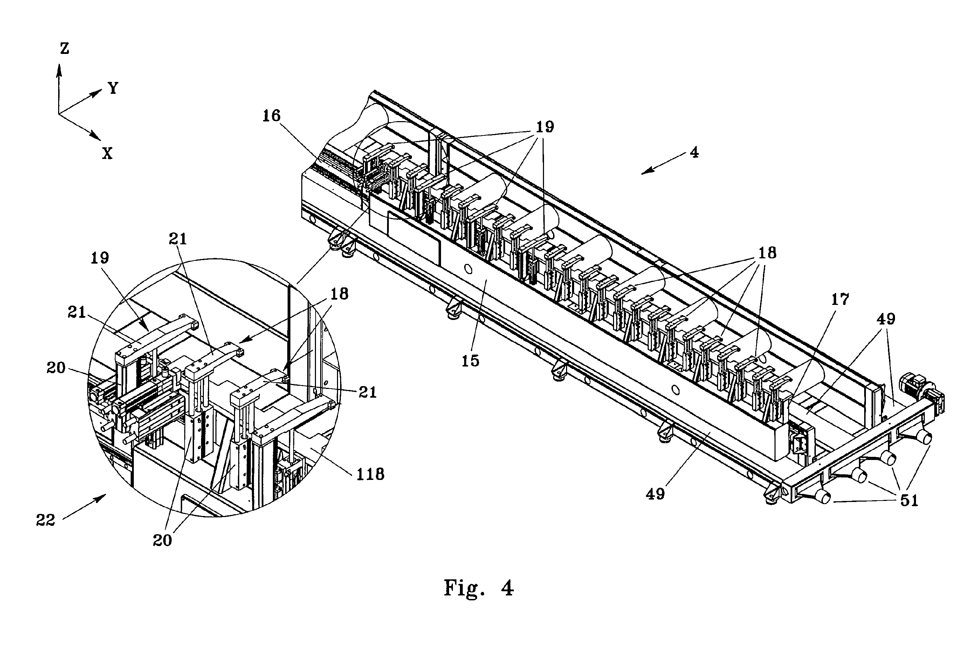

In particular (fig. 3), the loading zone is fitted with a manipulator 6 designed to pick up the semi-finished products from a loading belt, not shown in the figure, and position them on gripper carriage 4 (illustrated in figures 1 and 4).

Said manipulator 6 comprises a support structure 7 consisting of four uprights 8, joined at the top by two pairs of horizontal beams 9 and 10; guides on which a crosspiece 11 runs are mounted on beams 10, so that said crosspiece can traverse along a direction Y perpendicular to axes X1 and X2 .

Said crosspiece 11 in turn supports a pair of vertical guides 12, moved by a rack-and-pinion device, at the lower end of which is fitted a structural section 13, and which can move along a vertical direction coinciding with axis Z shown in the figure.

Structural section 13 is fitted with a plurality of grippers 14, driven by pneumatic actuators, which said grippers are designed to pick up the semi-manufactured product from the loading belt and deposit it on gripper carriage 4.

All the movements of the manipulator are effected via rack-and-pinion devices driven by electric motors controlled by a programmable numerical control system of known type, which allows the workpiece to be positioned on the gripper carriage by regulating its position along axis Y (fig. 4), so that grippers 18 and 19 which clamp it to the carriage engage the workpiece to a greater or lesser extent, depending on the dimensions of the workpiece and the operation to be performed.

Gripper carriage 4 comprises a supporting structure 15 mounted on a track 16, equipped with linear guides fitted with ball skids with oil-mist lubrication, which can slide along axis X1.

A beam 17 mounted on said structure 15 acts as support for two sets of vertical grippers 18 and 19, driven by pneumatic actuators.

Grippers 18 are positioned so that they are equidistant along the whole length of beam 17, while grippers 19, which are larger, are only positioned in the front part of the carriage, to ensure optimum grip even when short workpieces are machined.

Grippers 18 and 19 consist of a plurality of.pneumatic cylinders 20, secured to beam 17 in a vertical direction, and the same number of jaws 21 connected to the end of the rods of said cylinders 20.

Said grippers are designed to keep the semi-manufactured product clamped between jaws 21 and the upper surface of a plate 118, secured to beam 17, leaving the front part and the inner lateral surface of the workpiece free for end-trimming, drilling or milling and inner profiling operations ("inner surface" means the one facing the interior of the machine).

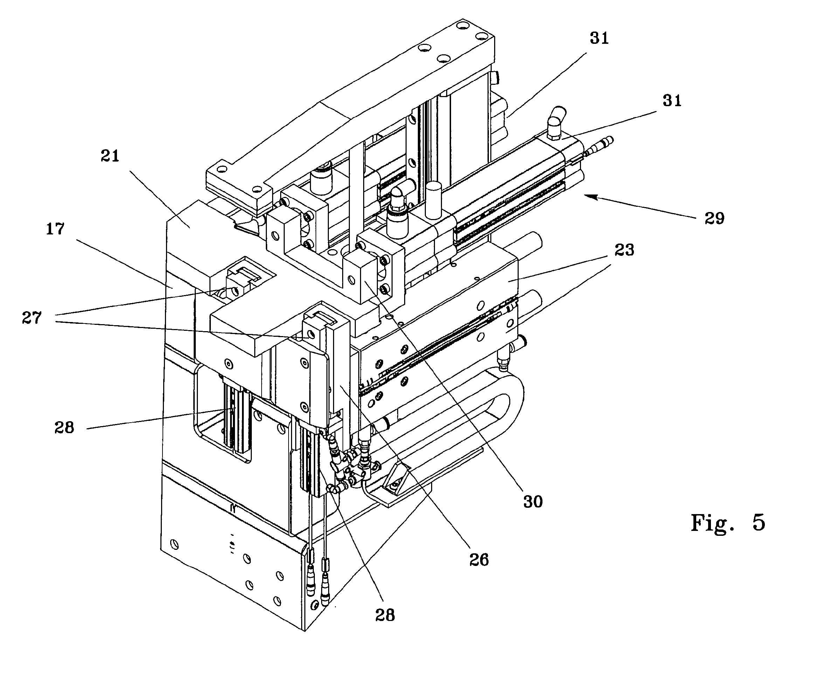

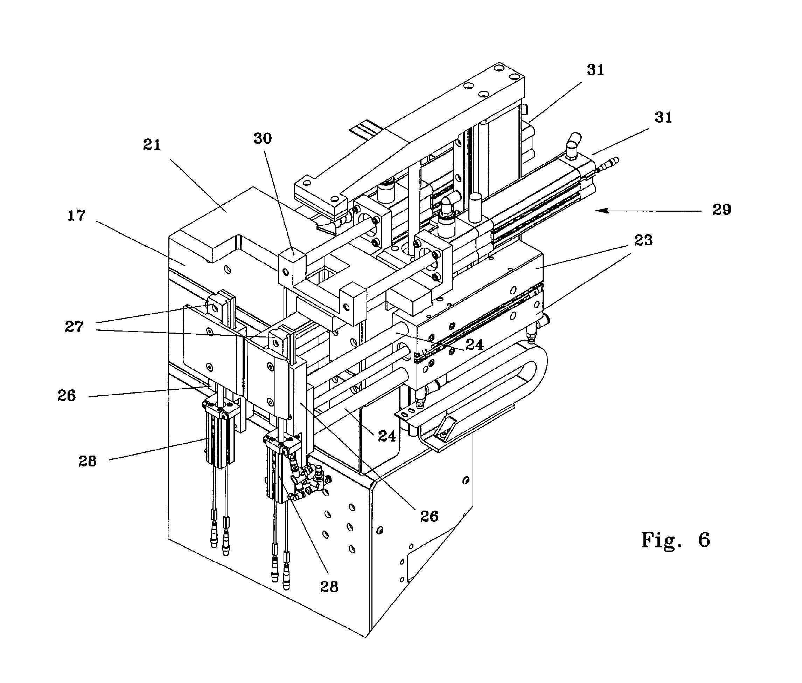

Carriage 4, like carriage 5, is equipped with a particular lateral clamping device 22, positioned on the front of beam 17, which is designed to improve the grip on the semi-manufactured product during end-trimming (figs. 5-6) by cooperating with grippers 18 and 19 to counteract the bending moments generated on the wooden bar during the machining of the projecting part.

Said lateral clamping device comprises two pairs of pneumatic cylinders 23, fixed horizontally to beam 17, and fitted with rods 24 which can move from a retracted position, in which they retract into said beam 17, to an operational position, in which they project laterally from it into the machine.

Two support plates 26, positioned vertically and fitted with guides, are attached to the ends of rods 24, and two sliders 27, driven by pneumatic actuators 28, are inserted in said guides.

Said sliders 27 can traverse vertically, in relation to said supports 26, from an initial position in which their upper end is at a lower level than the upper surface of base plate 118 to an operational position in which said end is above the level of the upper surface of plate 118.

### Said device operates as follows:

when the tool is about to commence end-trimming operations, rods 24 exit, moving sliders 27 beyond the lateral inside edge of the semi-manufactured product; said sliders are then raised a few centimetres by cylinders 28, and finally rods 24 retract, bringing the sliders into contact with the inner lateral edge of the workpiece and maintaining a certain pressure.

To eliminate the need to move the workpiece due to the lateral force exerted by the sliders, a counteracting system 29 is provided, which is positioned opposite to sliders 27 and at the outer lateral edge of the semi-manufactured product.

Said counteracting system comprises a bracket 30 connected to two dual-action pneumatic cylinders 31 with both chambers pressurised, which act as an air spring; when the workpiece has been positioned, the bracket is locked in position by a pneumatic control device. As said bracket 30 comes into contact with the outside lateral edge of the workpiece, it counteracts the force exerted by sliders 27, and helps to maintain the position of the workpiece.

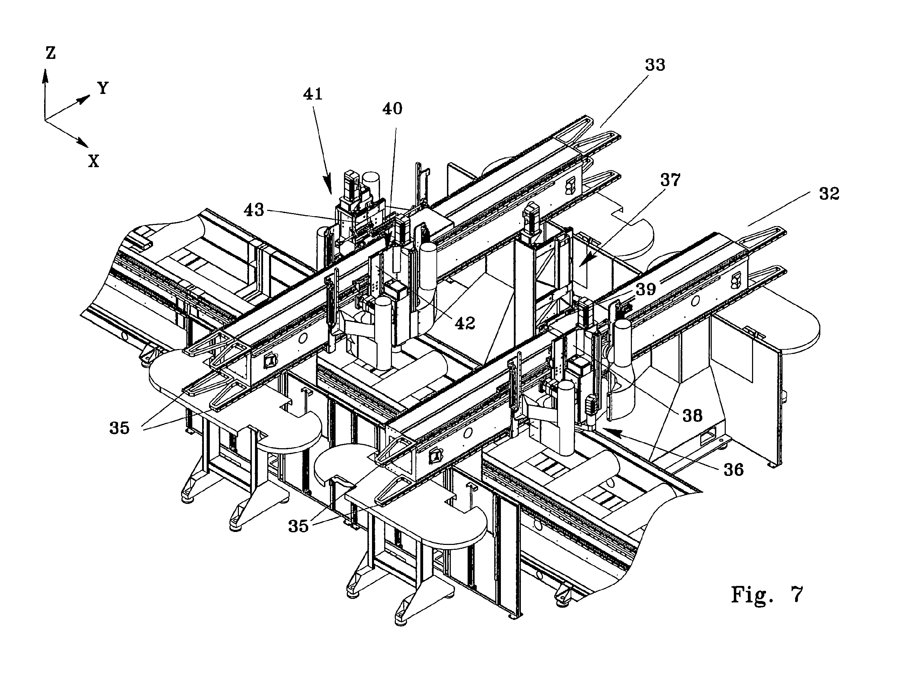

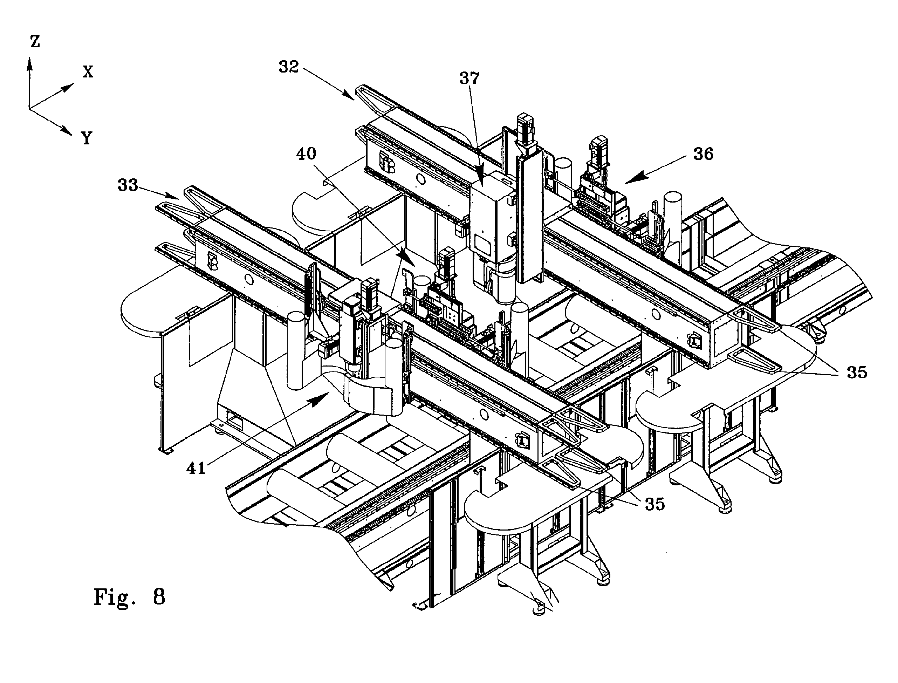

Operating zone 2 comprises two gantries 32 and 33 installed over the two tracks 6 and 34 on which carriages 4 and 5 respectively travel (fig. 7 and fig. 8).

Said gantries are fitted with guides 35, which allow an equal number of motorised chuck units to traverse along axis Y.

In particular, gantry 32 is fitted with a unit comprising a vertical chuck 36 for end-trimming work and a chuck 37 with two axes of rotation for vertical and diagonal milling and drilling work.

The chucks are mounted on two supports 38 and 39 via vertical guides, so that they can traverse vertically in relation to them, along axis Z shown in the figure.

Chuck 36 therefore moves along the set of three Cartesian axes X, Y and Z, while chuck 37 also has a pair of axes of rotation, making a total of five degrees of freedom.

Gantry 33 is also fitted with two chucks 40 and 41, both of which are similar to chuck 36 and used for internal and external profiling of the semi-manufactured product.

Said chucks are also mounted on two supports 42 and 43 via guides, and can traverse vertically in relation to said supports.

The supports in turn are mounted on the gantry crosspieces via guides 35, and can traverse along axis Y, allowing the chucks to machine the workpiece positioned on carriage 4 or carriage 5.

All movements of the motorised chuck units are driven by electric motors connected to the programmable numerical control system.

Operating zone 2 is also fitted with an innovative suction system which, combined with the chip extraction system, helps to keep clean the zone inside cabin 44 which surrounds the operating zone, thus improving the working conditions of the various devices in that zone.

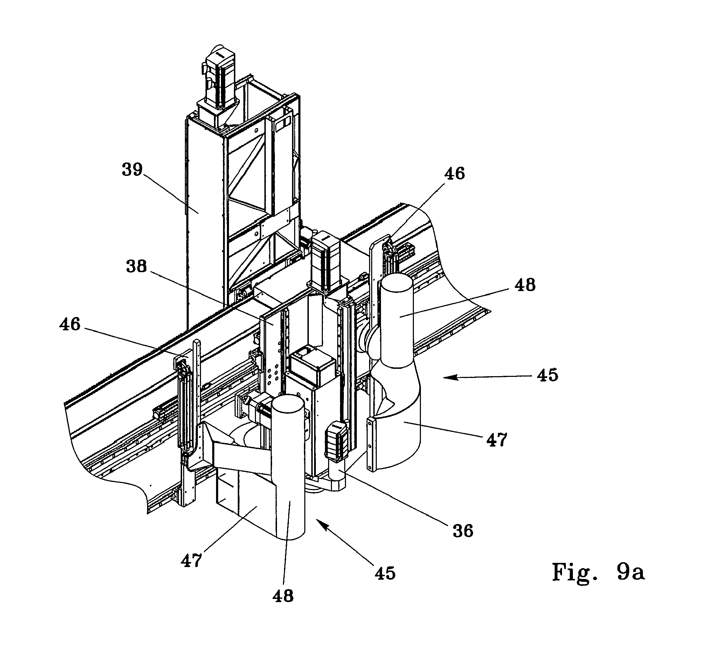

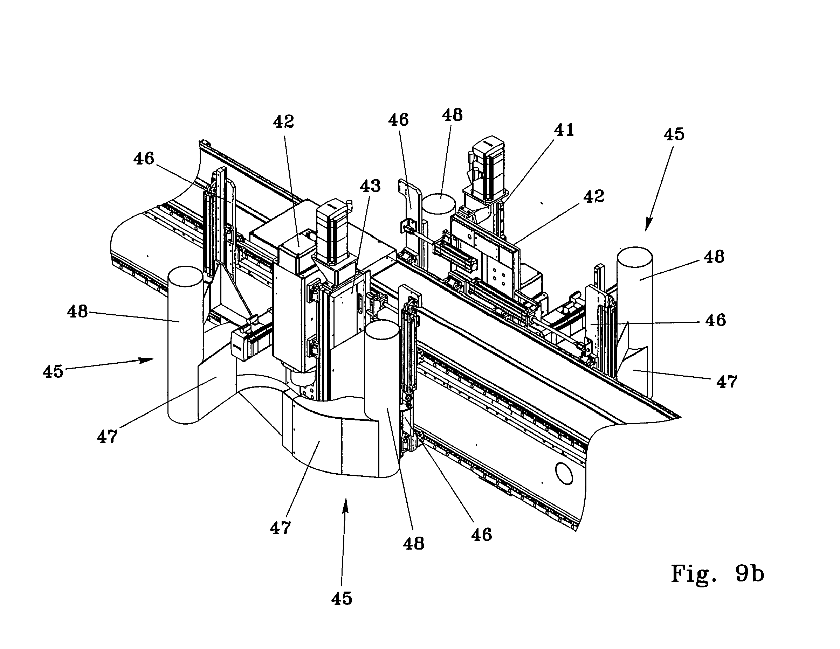

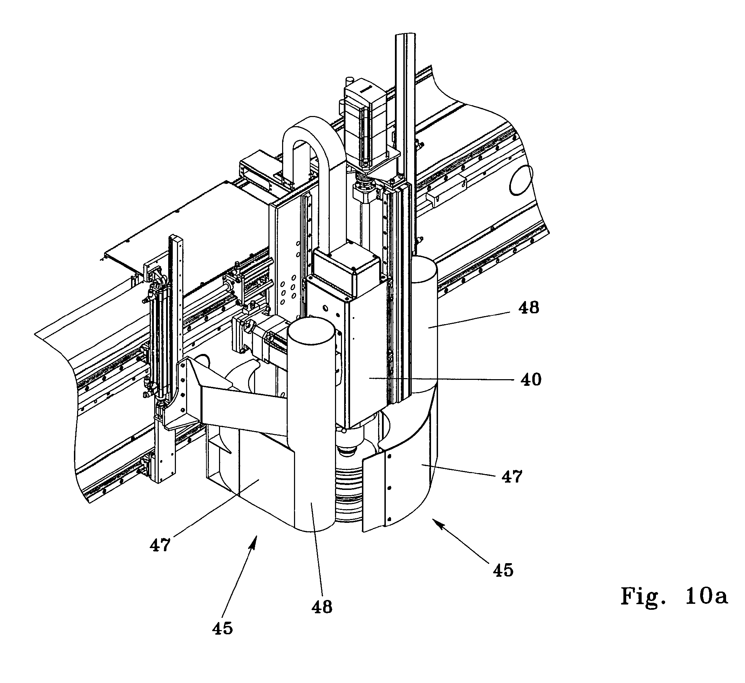

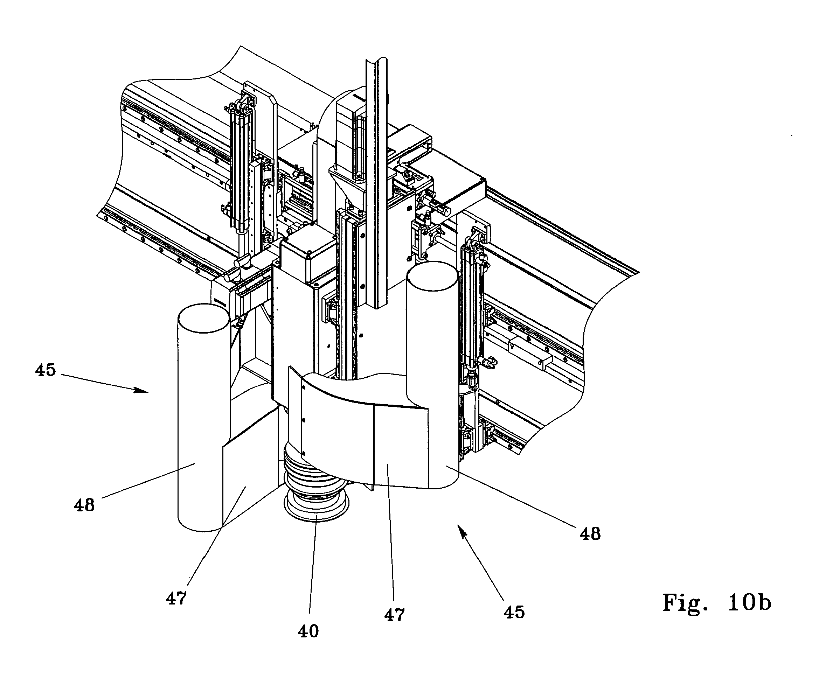

In particular, the suction system (figs. 9 and 10) includes a pair of mobile hoods positioned laterally in relation to each motorised chuck; said chucks operate alternately, depending on the position of the machined workpiece on carriage 4 or 5.

Figures 9a and 9b show said suction hoods 45; as will be seen, no suction hood is provided for chuck 37 with five degrees of freedom, because it requires greater freedom of movement than the other three motorised chucks.

Said hoods 45 are mounted on supports 46 fitted with guides which allow the hood to traverse vertically, from a non-operational position in which it remains substantially at the level of the gantry crosspiece to an operational position in which it is positioned alongside the head of the working chuck.

Supports 46 in turn are connected integrally to the motorised chuck support plates, and can also run on guides 35 along direction Y to follow the transverse movements of the motorised chuck.

Said hoods are characterised in that they have a lower part 47 consisting of a box-shaped element open on one side, which constitutes the suction aperture, shaped so that it partly surrounds the chuck head during machining; said box-shaped element is connected to a circular pipe 48 to which the pipes of the suction system are connected.

The hoods operate as follows.

When the chuck is not operational, the hood remains in a rest position raised above the level at which the workpieces are machined, and both hoods are adjoining and aligned with it, as shown in figure 10a.

When said chuck comes into operation it traverses vertically downwards, moving the operating head to the height of the workpiece; simultaneously, one of the two hoods also traverses downwards together with the chuck, and is positioned so as to keep the suction aperture of box-shaped element 47 aligned with the chuck head, as shown in figure 10b, to extract the chips produced.

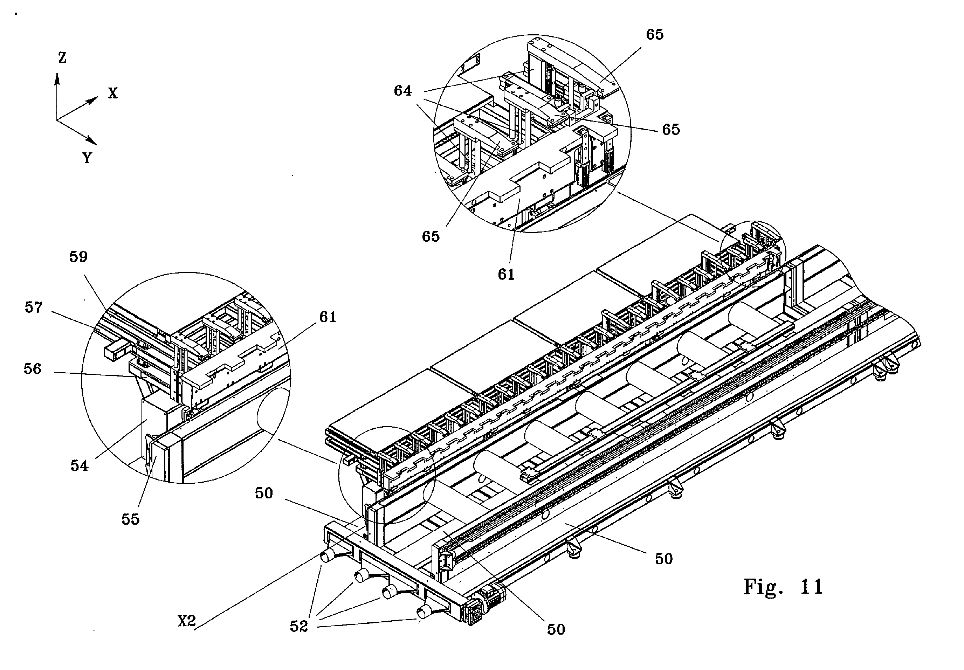

The chip extraction system comprises a series of motor-driven belts 49 (loading zone) and 50 (unloading zone) located between and at the sides of the two tracks 6 and 34 (fig. 4 and fig. 11).

Said belts 49 and 50 are counter-rotating, and are designed to convey machining residues not extracted by the hoods from zone 2 to the loading zone and unloading zone respectively, where they are collected by manifolds 51 and 52.

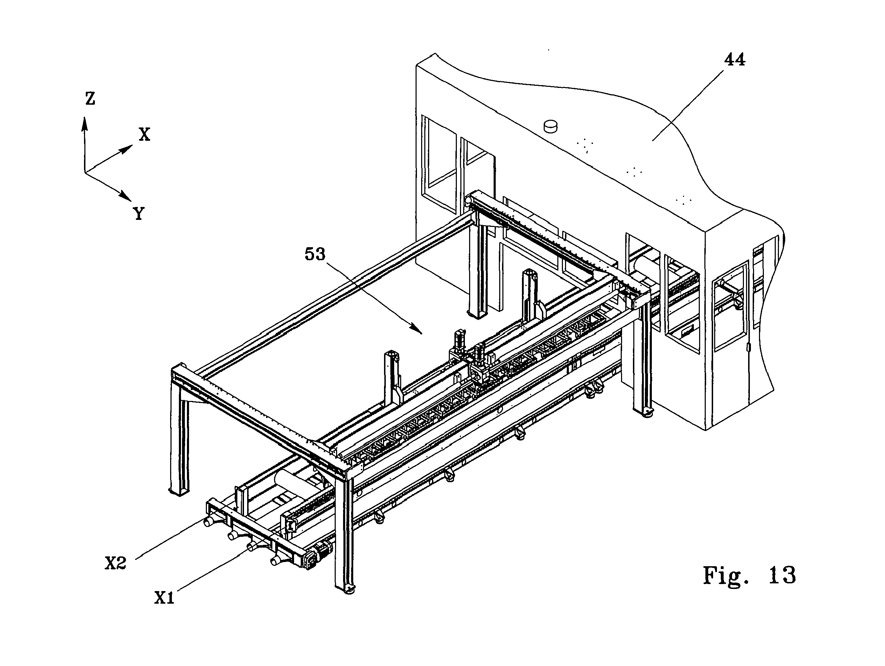

Workpiece traverse and unloading zone 3 (fig. 13) is fitted with a manipulator 53 designed to pick up the machined, finished workpieces from carriage 5 and deposit them on an output conveyor, not shown in the figure.

Said manipulator 53 presents the same construction and functional characteristics as manipulator 6 already described.

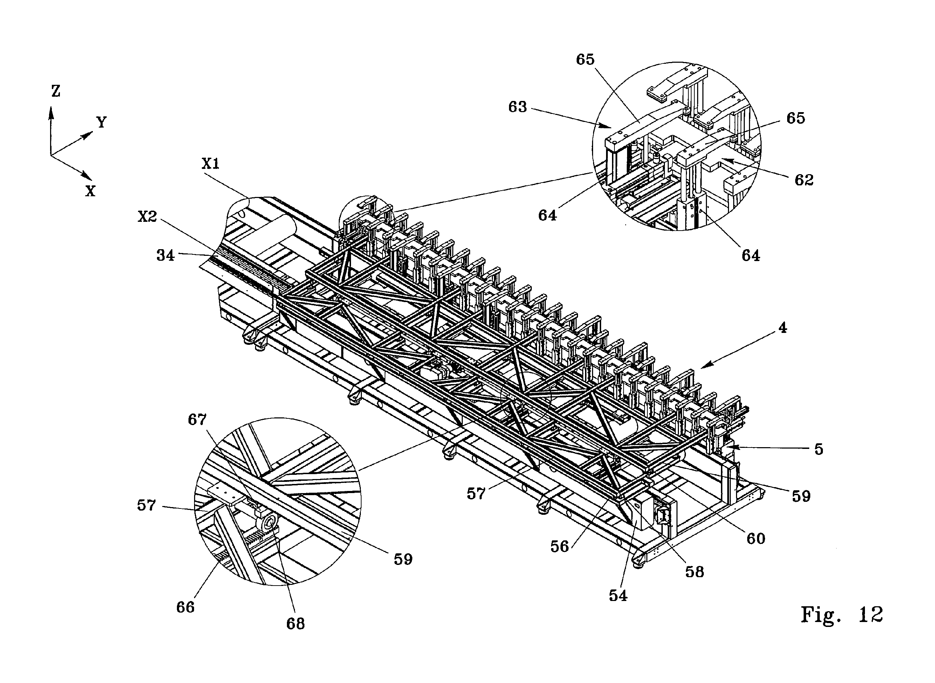

Carriage 5 (fig. 12) consists of a base 54 mounted on a track 34, equipped with linear guides fitted with ball skids with oil-mist lubrication, which slide along axis X2 shown in the figure.

A frame 56, mounted on base 54, is connected in turn to a second frame 57 via transverse guides 58, which allow said frame 57 to traverse along direction Y in relation to base 54.

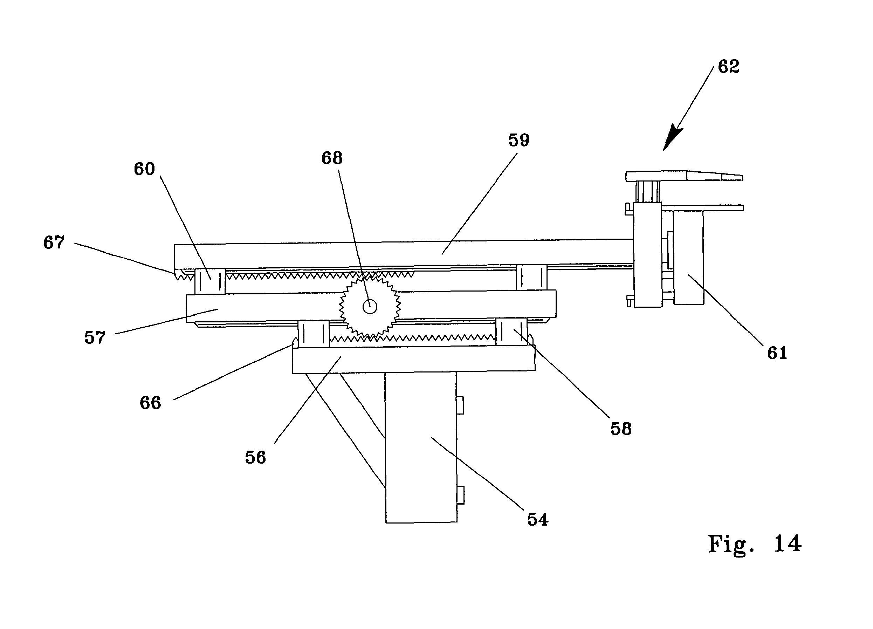

A third frame 59, which is mounted on frame 57, again via transverse guides 60, traverses along direction Y in relation to frame 57 and base 54 (see fig. 14).

A beam 61, similar to beam 17, is connected to said frame 59, and acts as support for vertical grippers 62 and 63 activated by pneumatic actuators.

Grippers 62 are positioned so that they are equidistant along the whole length of beam 61, while grippers 63, which are larger, are positioned in the front part of the carriage, to ensure optimum grip even if short workpieces are machined, as in the case of carriage 4 (fig. 12).

Grippers 62 and 63 consist of pneumatic cylinders 64, secured to beam 61 in a vertical direction, and the same number of jaws 65 connected to the end of the rods of said cylinders.

Carriage 4, like carriage 5, has a lateral clamping device 55 in the front part of the carriage; said device presents the same construction and functional characteristics as already described for carriage 4 (fig. 11).

Frames 57 and 59 traverse via a dual rack-and-pinion system driven by electric motors controlled by numerical control devices.

Said system comprises a series of facing racks 66 and 67 (fig. 14) connected to frame 56 and frame 59 respectively and driven by the same number of pinions 68 hinged to frame 57 and connected to the electric motor as shown in figure 12.

In this way, when pinion 68 rotates, frames 57 and 59 traverse simultaneously, under numerical control, moving gripper beam 61 alongside carriage 4 to pick up the semi-manufactured product and terminate the necessary operations without losing the initial position reference.

The workpiece machining process is performed as follows.

The semi-manufactured product is picked up from the loading belt by manipulator 6 and positioned on carriage 4, where it is grasped by grippers 18 and 19.

Carriage 4 traverses, moving the front part of the workpiece inside operating zone 2, where chuck 36 performs the end-trimming operation at the front end, and chuck 37 performs any required drilling or milling work.

When the end-trimming and milling operations have been completed, carriage 4 proceeds along the track to allow chucks 40 and 41 to perform the inner profiling operation (on a first side), with the tool stationary and the workpiece moving.

When the inner profiling has been completed, carriage 4 will be in workpiece traverse and unloading zone 3; at this point, gripper beam 61 of carriage 5 traverses along axis Y until it is alongside carriage 4, and clamps the semi-manufactured product with grippers 62 and 63 at the same time as grippers 18 and 19 are released.

Carriage 5 then returns to operating zone 2, where the rear end-trimming and external profiling operations are performed (second side).

When all machining has been finished, carriage 5 returns to the unloading zone, where manipulator 53 picks up the finished product and deposits it on an output conveyor. After the traverse of the workpiece between the two carriages, carriage 4 immediately returns to the loading zone to pick up a new semi-manufactured product and begin the first end-trimming and milling operations while external profiling is being completed on the current workpiece on carriage 5.

The result is optimised use of the machinery, with a considerable increase in production volumes.

## Claims

1. Woodworking machine of the type comprising first gripping means (4) designed to move along a first axis (X) to and from an operating zone, which said means are designed to receive a semi-manufactured product and move it along a route on which is located a workcell (44) with at least two tool units designed to perform end-trimming operations and machining on a first side of the workpiece, and second gripping means (5) designed to receive said semi-manufactured product and move it to perform work on the head and a second side, **characterised in that** said second gripping means (5) are positioned on the opposite side of said axis (X) to said first gripping means (4), numerically controlled means designed to move the workpiece from said first gripping means to said second gripping means being provided, and the initial position reference of the workpiece being maintained.

2. Woodworking machine as claimed in claim 1, **characterised in that** said first gripping means and said second gripping means consist of a first carriage (4), fitted with workpiece clamping grippers (18, 19) that slide to and from said operating zone (2), said carriage being designed to receive a semi-manufactured product and move it to perform machining on the head and a first side, and a second carriage (5), which also slides to and from operating zone (2), and is designed to perform machining on the head and a second side, means designed to traverse the workpiece from carriage (4) to carriage (5) being provided to release the second side, so that profiling can also be performed on said side, always maintaining the initial workpiece position reference.

3. Woodworking machine as claimed in claim 2, **characterised in that** said means designed to traverse the semi-manufactured product comprise a first frame (56), attached to base (54) of at least one (5) of said carriages (4, 5), fitted with guides (58) on which runs a second frame (57), which in turn is equipped with guides (60) on which runs a second frame (59), which said frames (57, 59) are fitted with abutting racks (66, 67), and moved by pinions (68) hinged to frame (57) which engage with said racks (66, 67).

4. Woodworking machine as claimed in claim 3, **characterised in that** said frame (59) is fitted with a plurality of grippers (62 and 63) designed to grip and clamp the semi-manufactured product when grippers (18 and 19) of carriage (4) are released.

5. Woodworking machine as claimed in claim 4, **characterised in that** pinions (68) are connected to electric motors controlled by a numerical control system, so as to maintain the absolute position reference of the workpiece during the traverse from carriage (4) to carriage (5).

6. Woodworking machine as claimed in any of the preceding claims, **characterised in that** said carriages (4 and 5) are fitted with a lateral clamping device (22 and 55 respectively) positioned close to the head of the carriage, comprising one or more pairs of pneumatic cylinders (23) with a substantially horizontal axis, fitted with rods (24) to the end of which vertical support plates (26) are fixed, and fitted with guides along which slide two sliders (27) driven by pneumatic actuators (28), said rods (24) being able to move from a retracted position in which they retract into said gripper support beam (17) to an operational position wherein they project laterally from it towards the inside of the machine to engage the workpiece laterally, said sliders (27) being designed to traverse vertically, in relation to said supports (26), from an initial position in which their upper end is at a lower level than the upper surface of workpiece support plate (118) to an operational position in which said end is above the level of the upper surface of plate (118).

7. Woodworking machine as claimed in any of the preceding claims, **characterised in that** operating zone (2) is fitted with a chip suction system comprising pairs of hoods (45) positioned laterally to each motorised chuck and mounted vertically slidingly on supports (46) which in turn are mounted on guides (35) of gantries (32 and 33).

8. Woodworking machine as claimed in claim 7, **characterised in that** said hoods (45) comprise a lower part (47) consisting of a box-shaped element open on one side, which constitutes the suction aperture, shaped so that it partly surrounds the head of the chuck during machining, which said box-shaped element is connected to a pipe 48 to which the pipes of the suction system are connected.

9. Woodworking machine as claimed in any of the preceding claims, **characterised in that** it includes, in the operating zone, a first gantry (32) fitted with at least two chucks that move along three Cartesian axes, one of which is a vertical axis (36), for end-trimming work, and one (37) of which also has two axes of rotation, for diagonal milling and drilling work, and a second gantry (33) which also has at least two chucks with a vertical axis (40 and 41) that move along three Cartesian axes, to perform profiling operations on both sides of the workpiece.
